# EUROPÄISCHE PATENTSCHRIFT

(11) **EP 0 865 705 B1**
(45) Veröffentlichungstag und Bekanntmachung des Hinweises auf die Patenterteilung: **16.06.2004**
(21) Anmeldenummer: 97937400.6
(22) Anmeldetag: 09.09.1997
(51) Int. Cl.: H04M 9/00, H04M 1/72, H04Q 3/42, H04Q 7/26

(54) **KEY-TELEFONSYSTEM MIT CORDLESS-ENDGERÄTEN**
KEY TELEPHONE SYSTEM WITH CORDLESS TERMINALS
INSTALLATION D'INTERCOMMUNICATION MIXTE AVEC TERMINAUX SANS FIL

(30) Priorität: 16.09.1996 CH 226196
(43) Veröffentlichungstag der Anmeldung: 23.09.1998
(73) Patentinhaber: Siemens Schweiz AG, 8047 Zürich (CH)
(72) Erfinder: RIPPSTEIN, Eugen, CH-8904 Aesch (CH)
(74) Vertreter: Kley, Hansjörg
(86) Internationale Anmeldenummer: PCT/CH1997/000332
(87) Internationale Veröffentlichungsnummer: WO 1998/012861

(56) Entgegenhaltungen:
- EP-A- 0 324 058
- EP-A- 0 549 126
- EP-A- 0 653 869
- US-A- 4 538 028
- US-A- 5 517 551
- HOGG R ET AL: "MARRIAGE OF CONVENIENCE: INTEGRATING CORDLESS HANDSET FUNCTIONALITYINTO KEY-TERMINALS" PHILIPS TELECOMMUNICATION REVIEW, Bd. 52, Nr. 1, 1.März 1994, Seiten 52-55, XP000435517
- BOLTJES C J: "FACILITIES FOR USERS OF SOPHO-SET FEATURE PHONES" PHILIPS TELECOMMUNICATION REVIEW, Bd. 48, Nr. 1, 1.März 1990, Seiten 20-27, XP000116333

## Beschreibung

Die vorliegende Erfindung betrifft ein Key-Telefonsystem mit Cordless-Endgeräten nach dem Oberbegriff des Patentanspruchs 1.

Neben einfachen Fernsprechapparaten, die an einer einzigen Anschlussleitung angeschlossen sind, gibt es Endgeräte, die mit einer Sprechschaltung über ein zusätzliches Bedienfeld Zugang zu mehreren Leitungen haben. Durch geeignete Zusammenschaltung mehrerer solcher Sonderendgeräte entstehen Anlagen, die z.B. als Vorzimmer-, Key-, Reihen- oder Makleranlagen bezeichnet werden. In F. Ohmann, Kommunikations-Endgeräte. Springer-Verlag. Berlin 1983, Kapitel 4.2.7, Seiten 187 - 193 werden drei wesentliche Anwendungsbeispiele für derarlige Anlagen beschrieben:
- hierarchisch gegliederte Arbeitsgruppe.
- Arbeitsgruppe mit Teamstruktur und
- zentrale Abfragestelle als Vertretung für abwesende Sachbearbeiter.

Von besonderer Bedeutung sind Makler- und Auftragsanlagen, bei denen jedes Mitglied einer Arbeitsgruppe jedes weitere Teammitglied in bezug auf externe Anrufe vertreten und dessen Gespräche übernehmen kann. Dazu werden mehrere gemeinsame Wählleitungen zu mehreren Endgeräten geführt. Externe Anrufe werden daher gleichzeitig auf mehreren Endgeräten signalisiert. so dass verschiedene Teammitglieder auf einen ankommenden Anruf eintreten können.

Bekanntlich erlauben z.B.-nach DECT- oder GSM-Normen arbeitende Cordless-Telefonsysteme dem Teilnehmer, seine Gespräche unabhängig von seinem Arbeitsplatz zu führen. In der EP 0 533 510 A2 ist ein Cordless- Telefonsystem mit Key-Funktionalität beschrieben, dessen Cordless-Telefone Funktionstasten und indikatoren aufweisen, die je einer Wählleitung zugeordnet sind. Ferner ist ein Speicher vorgesehen, der Angaben bezüglich den dem Cordless-Telefon zugeordneten Wählleitungen enthält. Das bekannte Cordless-Key-Telefonsystem weist die wesentlichen Leistungsmerkmale bekannter Key-Telefonsysteme auf. Beim Empfang eines Rufsignals prüft das Cordless- Telefon daher, ob die dem Rufsignal zugehörige Leitung dem betreffenden Cordless- Telefon zugeordnet ist. Falls dies zutrifft, wird der Anruf durch den Indikator angezeigt, wonach der Teilnehmer durch Antippen der zugehörigen Taste den Anruf übernehmen kann.

Das bekannte Cordless-Key-Telefonsystem weist daher besondere Cordless- Telefone auf, die eine zusätzliche Tastatur, einen zusätzlichen Speicherbereich sowie eine entsprechende Betriebssoftware benötigen und die daher verhällnismässig teuer sind. Konventionelle Cordless-Telefone ohne Key-Funktionalität sind hingegen nicht verwendbar. Die für den Teilnehmer vorgesehene Möglichkeit zum selektiven Eintreten auf Anrufe von verschiedenen Leitungen ist demgegenüber von geringerer Bedeutung.

Der vorliegenden Erfindung liegt daher die Aufgabe zugrunde, ein Key-Telefonsystem zu schaffen, in das auch konventionelle Cordless-Telefone eingebunden werden können, die kein spezielles Key-Bedienfeld und Leitungsindikatoren aufweisen.

Diese Aufgabe wird durch die im Patentanspruch 1 angegebenen Massnahmen gelöst. Vorteilhafte Ausgestaltungen der Erfindung sind in weiteren Ansprüchen angegeben.

Das erfindungsgemässe Cordless-Key-Telefonsystem erlaubt die Verwendung konventioneller Cordless-Telefone, die wie die stationären Key-Endgeräte ins Key-Telefonsystem eingebunden werden können.

Die Erfindung wird nachfolgend anhand einer Zeichnung beispielsweise näher erläutert. Dabei zeigt:
- Fig. 1: ein erfindungsgemässes Key-Telefonsystem,
- Fig. 2: das Key-Telefonsystem gemäss Fig. 1 ergänzt durch GSM-Endgerätedf und
- Fig. 3: mehrere einer Keyanlage zugehörige mobile und stationäre Endgeräte.

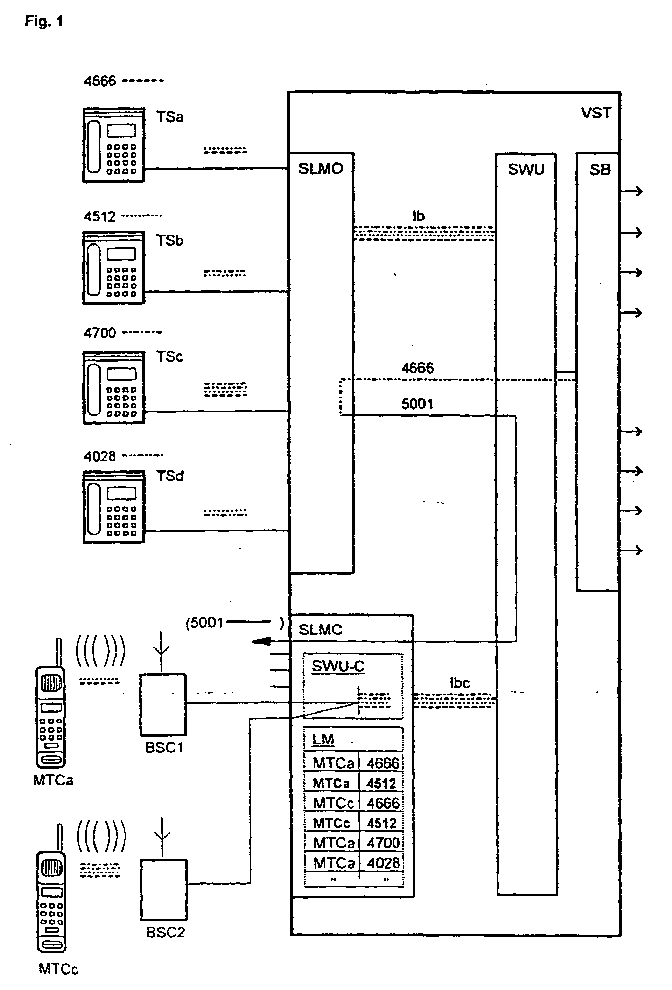

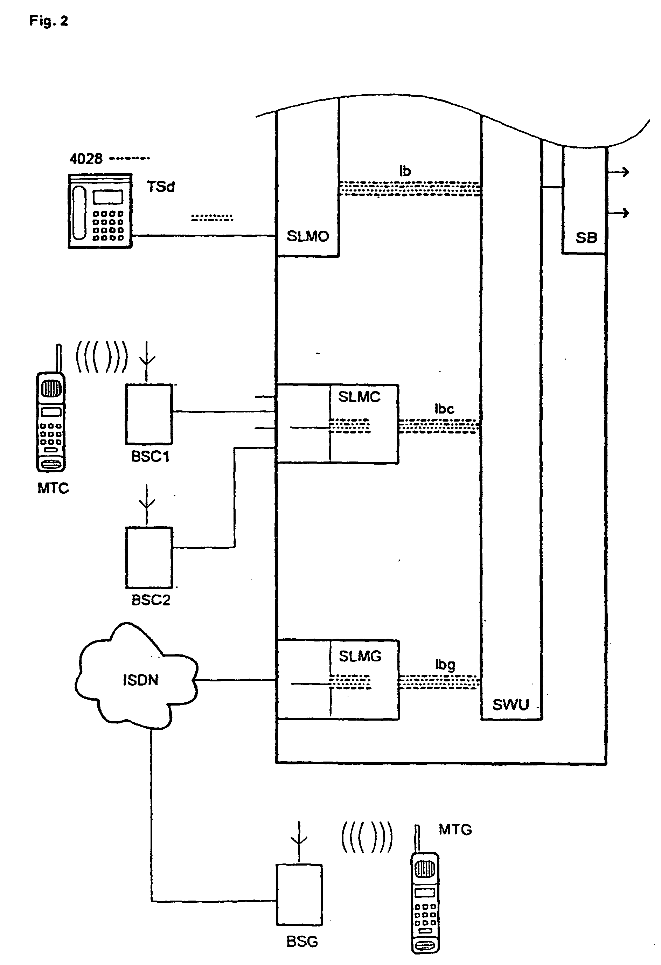

Fig. 1 zeigt eine private Nebenstellenanlage VST mit einer über eine Schnittstellenbaugruppe SB z.B. mit dem öffentlichen Netz verbundenen Durchschalteeinheit SWU. die Anrufe über Teilnehrnerleitungsschnittstellen (Subscriber Line Module) bzw. Servermodule SLMO (Key-System-Server). SLMC (Cordless-Server) und SLMG (die Erweiterung mit dem Servermodul SLMG (GSM-Server) ist in Fig. 2 gezeigt) zu stationären und mobilen Endgeräten TSa, TSb, TSc, TSd; MTC. MTG durchschaltet. Die mobilen Endgeräte MTC und MTG (in Fig. 2 gezeigt) werden über Funk- bzw. Basisstationen BSC1. BSC2 bzw. BSG kontaktiert, die an die Servermodule SLMC bzw. SLMG angeschlossen sind. Durch den Key-System-Server SLMO werden in bekannter Weise die für die Key-Punktionalität benötigten Leistungsmerkmale bereitgestellt.

Die Ankopplung von GSM-Endgeräten an die Basisslationen BSG sowie allenfalls notwendige Zonenwechsel erfolgen nach bekannten Verfahren, die z.B. in P. R. Gerke, Digitale Kommunikationsnetze, Springer Verlag, Heidelberg 1991. Kapitel 6.7 beschriebenen sind. Siehe auch die entsprechenden Empfehlungen der CEPT (Conférence Europ. des Administrations des Postes et Telecommunications) - Gruppe GSM (Groupe Speciale Mobile).

Die Cordless-Endgeräte MTC arbeiten vorzugsweise nach dem DECT-Verfahren (DECT: Digital European Cordless Telecommunication. Europäischer Standard (ETS) für die schnurlose Telefonie. DECT arbeitet im Frequenzbereich bis 1900 MHz mit einem kombinierten Zugriffrsverfahren aus Frequenzmultiplexverfahren mit 10 Trägersignalen (FDMA) und Zeitmultiplexverfahren mit 24 Zeitlagen (TDMA). Bei einer Anschlusskapazität von 120 Kanälen stehen maximal 12 gleichzeitige Duplexverbindungen mit 32 kbit/s (netto) zur Verfügung. Die maximale Reichweite in Gebäuden beschränkt sich auf 200m). Das DECT-Verfahren ist u.a. auch in R. Gerke. a.a.O.. Seite 311 beschrieben.

Für die vorliegende Erfindung können nach dem DECT- und nach dem GSM-Standard sowie nach beliebigen weiteren Verfahren arbeitende mobile Endgeräte verwendet werden.

Gemäss F. Ohmann, a.a.O.. Seite 193 sind die heute angebotenen Keyanlagen in ihren Leistungsmerkmalen und Baustufen weitgehend von den Gegebenheiten des internationalen Marktes geprägt. Sie sind dort bei Teilnehmerzahlen von bis zu 100 die am stärksten verbreitete Form der Nebenstellenanlagen. Bei kleinen Keyanlagen (bis ca. 20 Teilnehmer und bis zu 6 Wählleitungen) hat jeder Teilnehmer gezielten Zugriff zu allen Wählleitungen (squared system). Grössere Keyanlagen (bis ca. 100 Teilnehmer und bis zu 24 Wählleitungen) sind so ausgeführt. dass die einzelnen Sprechstellen nur zu gezielt festgelegten Leitungen Zugang haben (non squared system).

In Fig. 1 und 2 werden dem Key-System-Server SLMO u.a. die Leitungen lb mit den Rufnummern 4666. 4512, 4700 und 4028 zugeführt, von denen der Key-System-Server SLMO über Leitungen mit den Rufnummern 4666 und 4512 mit den Key-Endgeräten TSa und TSb, über Leitungen mit den Rufnummem 4666, 4700, 4028 und 4512 mit dem Key-Endgerät TSc und über Leitungen mit den Rufnummem 4028 und 4512 mit dem Key-Endgerät TSd verbunden ist (jede Rufnummer ist mit einer unterschiedlichen Linie dargestellt). Die Zuordnung der Leitungen zu den Key-Endgeräten erfolgt jeweils nach den Bedürfnissen der Teilnehmer, die oft in einem Team zusammenarbeiten. Die Teammitglieder, die über ihre stationären Key-Endgeräte wahlweise auf die ihnen zugeordneten Leitungen zugreifen können, verfügen oft über Cordless-Telefone. um jederzeit erreichbar zu sein. Bei Verlassen des Büros wurde bisher eine Anrufumleitung vom stationären zum mobilen Endgerät vorgenommen (oder es wird ein System gemäss der EP 0 533 510 A2 verwendet) In Fig. 1 ist ersichtlich, dass der Teilnehmer mit der Rufnummer 4666 die Anrufe auf sein mobiles Cordless-Endgerät MTC mit der Rufnummer 5001 umgeleitet hat. Aufgrund der automatischen Anrufumleitung können die restlichen Teammitglieder nicht mehr auf die über die Leitung mit der Rufnummer 4666 eintreffenden Anrufe eintreten. Falls der Teilnehmer, der die Anrufumleitung aktiviert hat, sein mobiles Cordless-Endgerät MTC nicht in Reichweite hat, werden die Anrufe auf Rufnummer 4666 nicht beantwortet.

Erfindungsgemäss werden daher alle von den Teilnehmem benötigten Leitungen auch zum Cordless-Server SLMC oder zum GSM-Server SLMG durchgeschaltet, durch die ein mobiles Endgerät MTC oder MTG gerufen wird, sobald über eine der dem betreffenden mobilen Endgerät MTC oder MTG zugeordneten Leitungen ein Anruf eintrifft. In Fig. 1 ist gezeigt, dass die Teilnehmer mit dem stationären Key-Endgerät TSa bzw. TSc über mobile Cordless-Endgeräte MTCa bzw. MTCc verfügen, denen dieselben Leitungen (Rufnummern 4666, 4512 bzw. 4666, 4512, 4700, 4028) zugeordnet sind, wie den zugehörigen stationären Key-Endgerät TSa und TSc. Durch den Cordless-Server SLMC werden beim Eintreffen eines Anrufs die Leitungen zu den mobilen Cordless-Endgeräten MTC durchgeschaltet. Dazu weist der Cordless-Server SLMC (oder der GSM-Server SLMG) eine Speichereinheit LM auf, in der die den mobilen Cordless-Endgeräten MTCa bzw. MTCc zugeordneten Rufnummem abgelegt sind. Beim Eintreffen eines Anrufs wird anhand der in der Speichereinheit LM abgelegten Daten festgestellt, welchen mobilen Cordless-Endgeräten MTC die zu vermitteinde Leitung zugeordnet ist. Danach wird die Leitung den betreffenden Teilnehmern durch eine im Cordless-Server SLMC (oder der GSM-Server SLMG) vorgesehene Durchschalteeinheit SWU-C durchgeschaltet. In Fig. 1 ist beispielsweise dargestellt, dass die Leitung mit der Rufnummer 4512 (punktierte Linie) an alle stationären und mobilen Endgeräte TS bzw. MTC durchgeschaltet wird.

In der Speichereinheit LM ist vorzugsweise noch festgelegt. welche Leitungen den mobilen Endgeräten MTCa bzw. MTCc für gehende Anrufe prioritär zugeordnet sind.

Nach dem DECT-Standard arbeitende mobilen Endgerät MTC erlauben die Indikation der gerufenen Nummer auf der Anzeige (z.B. einem LCD-Display) des Gerätes. Dadurch erkennt der Benutzer des mobilen Endgerätes MTC jeweils über welche Leitung er gerufen wird und kann somit selektiv auf die Anrufe eintreten. Ein Bedienfeld mit einer zusätzlichen Anzeige z.B. mittels LED's ist daher praktisch nicht notwendig. Falls z.B. die Nummer 4666 gerufen wird, so wird sowohl auf den stationären Key-Endgeräten TSa und TSc, als auch auf den mobilen Cordless-Endgeräten MTCa und MTCc ein Rufsignal abgegeben. Auf den stationären Key-Endgeräten TSa und TSc erfolgt die Indikation der gerufenen Nummer z.B. durch eine Leuchtdiode. Auf der Anzeige der Cordless-Endgeräte MTCa und MTCc erscheint hingegen die Nummer 4666. Die diesen Endgeräten TSa. MTCa und TSc. MTCc zugeordneten Teilnehmer können daher, unabhängig davon, ob sie sich im Büro befinden oder unterwegs sind, Anrufe auf die Rufnummern 4666 und 4512 übernehmen (der Teilnehmer mit den Endgeräten TSc und MTCc kann zusätzlich Anrufe auf die Rufnummern 4700 sowie 4028 übernehmen). Dadurch ergibt sich der Vorteil. dass sowohl der abwesende Teilnehmer, als auch die weiteren Teammitglieder. z.B. die Sekretärin. Anrufe auf die dem abwesenden Teilnehmer zugeordneten Rufnummern übemehmen können.

Vorzugsweise werden den mobilen Endgeräten MTC. MTG nur die Leitungen zugeführt, die der betreffende Teilnehmer regelmässig benötigt. Z.B. wird nur die Rufnummer des persönlichen stationären Key-Endgerätes TS sowie die Nummer eines Partners durchgeschaltet. der für dasselbe Sachgebiet zuständig ist. Ein Zugriff auf die Leitungen aller Teammitglieder über ein mobiles Endgerät MTC. MTG ist unter Umständen nicht notwendig. Der Teilnehmer mit den Endgeräten TSc und MTCc kann z.B. über das stationäre Endgerät TSc auf die Leitungen mit den Rufnummem 4666, 4512. 4700 und 4028 und über das mobile Endgerät MTC und/oder MTG z.B. nur auf die Leitungen mit den Rufnummern 4700 und 4028 zugreifen.

Insbesondere, falls eine Anzeige der gerufenen Nummer nicht möglich ist, werden vorzugsweise mobile Endgeräte MTC und/oder MTG verwendet. die zur Abgabe unterschiedlicher Rufsignale geeignet sind, so dass einer oder mehreren durchzuschattenden Leitungen im Cordless- und/oder im GSM-Server ein gesonderter Rufton zugeordnet werden kann. Dadurch kann der Teilnehmer feststellen, über welche Leitung er gerufen wird. Verfahren zur Erzeugung beliebiger Rufsignalrythmen in der Nebenstellenanlage VST oder den darin vorgesehenen Servem SLMO. SLMC. SLMG sind dem Fachmann z.B. aus der CH-PS 624 808 bekannt.

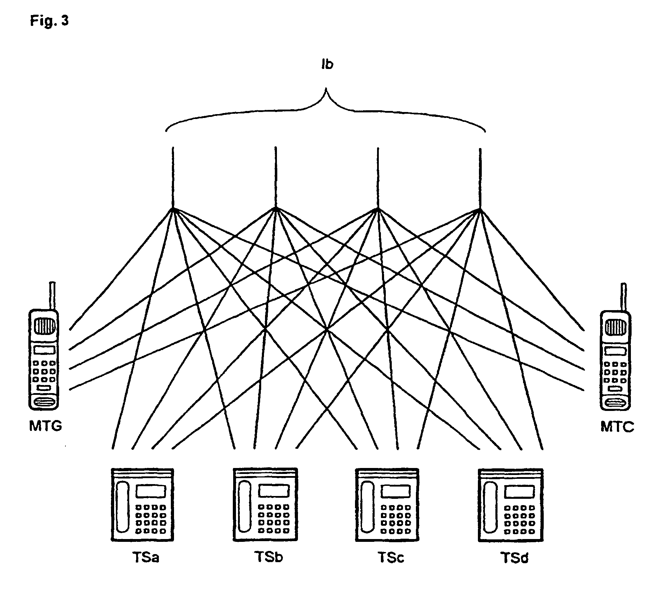

Wie in Fig. 3 dargestellt. bleiben abwesende Teammitglieder auch bei Abwesenheit über ihre mobilen Endgeräte MTC und/oder MTG in das Key-System eingebunden.

## Patentansprüche

1. Key-Telefonsystem mit einer eine Durchschalteeinheit (SWU) aufweisenden Nebenstellenanlage (VST), die zur Durchschaltung von Anrufen zu stationären Key- sowie mobilen Cordless- und/oder GSM-Endgeräten (TSa, ..., TSd; MTC. MTG) vorgesehen ist, wobei die stationären Key-Endgeräte (TSa, ..., TSd) über ein erstes Leitungsbündel (lb) und einen Key-System-Server (SLMO) mit der Durchschalteeinheit (SWU) verbindbar sind, **dadurch gekennzeichnet, dass** die Durchschalteeinheit (SWU) über ein zweites Leitungsbündel (lbc; lbg) mit wenigstens einem weiteren Server (SLMC; SLMG) verbunden ist, der eine Speichereinheit (LM) aufweist, in der die jedem Cordless- und/oder GSM-Endgerät (MTC. MTG) zugeordneten Leitungen bezeichnet sind, dass der weitere Server (SLMC: SLMG) ferner eine eigene Durchschalteeinheit (SWU-C) aufweist. durch die die den Cordless- und/oder GSM-Endgeräten (MTC, MTG) zugeordneten Leitungen durchschaltbar sind und dass wenigstens einem stationären Key-Endgerät (TSa, ..., TSd) ein mobiles Cordless- und/oder ein GSM-Endgerät (MTC, MTG) zugehörig ist, dem zumindest teilweise dieselben Leitungen zugeordnet sind, wie dem stationären Key-Endgerät (TSa, ..., TSd).

2. Key-Telefonsystem nach Anspruch 1, **dadurch gekennzeichnet, dass** in der Speichereinheit (LM) die den mobilen Cordless- und/oder GSM-Endgeräten (MTC, MTG) für gehende Anrufe zugeordneten Leitungen bezeichnet sind.

3. Key-Telefonsystem nach Anspruch 1 oder 2, **dadurch gekennzeichnet, dass** die mobilen Cordlessund/oder GSM-Endgeräte (MTC, MTG) konventionell aufgebaut sind.

4. Key-Telefonsystem nach Anspruch 1, 2 oder 3, **dadurch gekennzeichnet, dass** die weiteren Server (SLMC) zur Signalsierung der gerufenen Nummer und die mobilen Endgeräte (MTC) zur Anzeige der signalisierten Nummer geeignet sind.

5. Key-Telefonsystem nach Anspruch 1, 2, 3 oder 4, **dadurch gekennzeichnet, dass** den durchzuschaltenden Leitungen im Cordless- und/oder im GSM-Server (SLMC; SLMG) verschiedene Rufsignale zuordenbar und generierbar sind.

6. Key-Telefonsystem nach einem der Ansprüche 1 - 5, **dadurch gekennzeichnet, dass** die mobilen-Endgeräte (MTC, MTG) nach dem DECT-, dem GSM- oder einem weiteren Standard arbeiten.

## Claims

1. Key telephone system with a private branch exchange (VST) featuring a switching unit (SWU) which is designed for through connection of calls to stationary key terminals as well as mobile and/or GSM terminals (TSa, .... TSd; MTC, MTG), in which case the stationary key terminals (TSa, .... TSd) can be linked via a first trunk group (lb) and a key system server (SLMO) to the switching unit (SWU), **characterized in that** the switching unit (SWU) is linked via a second trunk group (lbc: lbg) to at least one further server (SLMC: SLMG) which features a memory unit (LM) in which the trunks assigned to each cordless and/or GSM terminal (MTC, MTG) are identified, that the other servers (SLMC: SLMG) further feature their own switching unit (SWU-C), through which the trunks assigned to the cordless and/or GSM terminals (MTC, MTG) can be switched and that a mobile cordless and/or a GSM terminal (MTC, MTG) belongs to at least one stationary key terminal (TSa, .... TSd) to which at least partly the same trunks are assigned as are assigned to the stationary key terminal (TSa, .... TSd).

2. Key telephone system in accordance with Claim 1, **characterized in that** in the memory unit (LM) the trunks assigned to the mobile cordless and/or GSM terminals (MTC, MTG) for outgoing calls are identified.

3. Key telephone system in accordance with Claim 1 or 2, **characterized in that** the mobile cordless and/or GSM terminals (MTC, MTG) are of conventional construction.

4. Key telephone system in accordance with Claim 1, 2 or 3, **characterized in that** the further servers (SLMC) are suitable for signalling the called numbers and the mobile terminals (MTC) are suitable for displaying the signalled number.

5. Key telephone system in accordance with Claim 1, 2, 3 or 4, **characterized in that** different ringing signals can be assigned or generated in the cordless and/or the GSM servers (SLMC; SLMG) for the trunks to be through connected.

6. Key telephone system in accordance with one of the Claims 1 - 5, **characterized in that** the mobile terminals (MTC, MTG) operate in accordance with the DECT, the GSM or a further standard.

## Revendications

1. Système de téléphone à touches, comprenant un central privé (VST) qui comporte une unité de commutation (SWU) et qui est prévu pour la commutation d'appels à des terminaux fixes à touche, ainsi qu'à des terminaux mobiles sans fil et/ou GSM (TSa, ..., TSd ; MTC, MTG), les terminaux fixes à touches (TSa, ..., TSd) pouvant être reliés à l'unité de commutation (SWU) via un premier faisceau de lignes (lb) et un serveur de système à touches (SLMO).
**caractérisé en ce que**
l'unité de commutation (SWU) est reliée via un deuxième faisceau de lignes (lbc ; lbg) à au moins un autre serveur (SLMC ; SLMG) qui comporte une unité de mémorisation (LM) dans laquelle sont spécifiées les lignes associées à chaque terminal sans fil et/ou GSM (MTC, MTG),
l'autre serveur (SLMC, SLMG) comporte en outre sa propre unité de commutation (SWU-C) permettant de commuter les lignes associées aux terminaux sans fil et/ou GSM (MTC, MTG). et
un terminal mobile sans fil et/ou GSM (MTC, MTG) est associé à au moins un terminal fixe à touches (TSa, ..., TSd), les mêmes lignes que celles destinées au terminal fixe à touches (TSa, ..., TSd) étant associées au moins partiellement à ce terminal mobile sans fil et/ou GSM (MTC, MTG).

2. Système de téléphone à touches selon la revendication 1, **caractérisé en ce que** les lignes associées aux terminaux mobiles sans fil et/ou GSM (MTC, MTG) destinés aux appels entrant sont spécifiées dans l'unité de mémorisation (LM).

3. Système de téléphone à touches selon la revendication 1 ou 2, **caractérisé en ce que** les terminaux mobiles sans fil et/ou GSM (MTC, MTG) ont une structure traditionnelle.

4. Système de téléphone à touches selon la revendication 1, 2 ou 3, **caractérisé en ce que** les autres serveurs (SLMC) sont appropriés pour signaler le numéro appelé et les terminaux mobiles (MTC) sont appropriés pour afficher le numéro signalé.

5. Système de téléphone à touches selon la revendication 1, 2, 3 ou 4, **caractérisé en ce que** différents signaux d'appel peuvent être générés et associés aux lignes à connecter dans le serveur sans fil et/ou GSM (SLMC, SLMG).

6. Système de téléphone à touches selon la revendication 1 à 5, **caractérisé en ce que** les terminaux mobiles (MTC, MTG) fonctionnent selon la norme DECT, GSM ou autre.
